# EUROPÄISCHE PATENTSCHRIFT

(11) **EP 0 559 666 B1**
(45) Veröffentlichungstag und Bekanntmachung des Hinweises auf die Patenterteilung: **01.02.1995**
(21) Anmeldenummer: 91919454.8
(22) Anmeldetag: 13.11.1991
(51) Int. Cl.: H02K 3/52, H02K 1/08

(54) **POLKERN**
POLE CORE
NOYAU POLAIRE

(30) Priorität: 29.11.1990 DE 4038029
(43) Veröffentlichungstag der Anmeldung: 15.09.1993
(73) Patentinhaber: ROBERT BOSCH GMBH, 70442 Stuttgart (DE)
(72) Erfinder: WUERTH, Hans, D-7140 Ludwigsburg (DE); PFANDER, Werner, D-7012 Fellbach (DE); GRITSCHMEIER, Walter, D-7050 Waiblingen (DE); POST, Wilhelm, D-7123 Sachsenheim (DE); LEINHOS, Juergen, D-3400 Goettingen 1 (DE); KESSLER, Hans Juergen, D-7129 Zaberfeld-Michelbach (DE); EILERT, Klaus, D-3511 Juehnde 2 (DE); KLEEMANN, Dittmar, D-3403 Friedland 1 (DE); KROEGER, Uwe, D-3400 Goettingen (DE); SEELIGER, Juergen, D-3400 Goettingen (DE); SOELLICK, Juergen, D-3400 Goettingen (DE)
(86) Internationale Anmeldenummer: DE9100877
(87) Internationale Veröffentlichungsnummer: WO9210021

(56) Entgegenhaltungen:
- AT-A- 0 293 533
- DE-C- 0 714 806
- FR-A- 0 392 926
- FR-A- 2 373 907

## Beschreibung

### Stand der Technik

Die Erfindung geht aus von einem Polkern nach Gattung des Hauptanspruchs.

Bei einem bekannten Polkern (WO 89/06874) entspringen von dessen Grundkörper Pollappen, die sich entlang der Längsseiten des Polkerns erstrecken. Die Erregerwicklung des Gleichstrommotors wird zwischen der Gehäuseinnenwand, an der der Polkern festgeschraubt wird, und den Pollappen eingespannt. Um eine Beschädigung der Isolierung der Erregerwicklung zu vermeiden, wird zwischen Polkern und Wicklung ein besonderer Isolationskörper aus elastischem Material eingebracht. Einbautoleranzen werden durch die Plastizität des Isolationskörpers beziehungsweise der Isolierungsmasse des Spulenkörpers ausgeglichen, die auch eine Vorspannung der zusammengebauten Einheit ergibt und damit eine Sicherung gegen ein Lösen der Verbindung.

Aus der DE-C 714 806 ist eine Anordnung zur Befestigung einer Spule im Polgehäuse einer elektrischen Maschine durch elastische Federelemente bekannt, wobei diese Federelemente jeweils separat hergestellt und jeweils auf einem Polkern von Wendepolen festgenietet sind. Aus der FR-A 237 3907 ist es bekannt, die Wicklungen auf einem Polkern zu befestigen, indem die Wicklungen zunächst auf Polkerne mit hochgestellten Pollappen aufgeschoben werden und indem danach die starren Pollappen nach außen in ihre Endlage oberhalb der jeweiligen Wicklung umgebogen werden. Zur Vermeidung von Beschädigungen an den Wicklungen dürfen dabei die Pollappen nur bis auf die Oberseite der Wicklungen zurückgebogen werden, so daß sie anschließend innerhalb der elastischen Verformung wieder zurückfedern und somit keinesfalls die Wicklungen elastisch federnd gegen das Polgehäuse drücken können. Dies gilt auch für eine andere Ausführungsform aus dieser Druckschrift, bei der nur jeweils ein Pollappen seitlich vom Polkern abstehend starr angeformt ist.

Aus der FR-A 392 926 ist schließlich eine Spulenanordnung im Polgehäuse von elektrischen Maschinen bekannt, bei dem ein Polkern mit seitlich abstehenden starren Pollappen zur Befestigung einer Wicklung mit dem Gehäuse verschraubt wird, wobei die Wicklung zwischen den Pollappen und dem Gehäuse eingespannt ist. Um die Erregerwicklung gegen Beschädigung beim Einspannen zu schützen, ist dort ein zusätzliches Blechteil vorgesehen, welches die Erregerwicklung an der Innenseite des Polgehäuses festhält. Eine elastische Einspannung der Wicklung zwischen Polgehäuse und Polkern ist folglich auch hier ohne ein zusätzlich herzustellendes und zu montierendes Teil nicht möglich.

### Vorteile der Erfindung

Der erfindungsgemäße Polkern mit den im Hauptanspruch genannten Merkmalen hat demgegenüber den Vorteil, daß auch hochfeste Isolationsbeschichtungen für die Erregerspulen verwendet werden können, die eine weit geringere Plastizität aufweisen, als herkömmliche PVC-Beschichtungen.

Dadurch, daß die Pollappen mit dem Grundkörper des Polkerns nachgiebig verbunden sind, können Einbautoleranzen ohne einen besonderen Isolationskörper ausgeglichen werden. Gleichzeitig wird bei der Montage des Polkerns und bei der Einspannung der Erregerwicklung eine Vorspannung gewährleistet, durch die auch bei dynamischer Belastung durch Schwingungen eine Lockerung der Montageeinheit vermieden wird.

Besonders bevorzugt wird eine Ausführungsform des Polkerns, bei dem die Pollappen im Übergangsbereich zum Grundkörper des Polkerns mit einer Ausnehmung beziehungsweise mit einer Nut versehen sind. Insbesondere wenn diese auf der Innenseite, also auf der der Erregerwicklung zugewandten Seite des Pollappens angeordnet ist, wird eine Belastung des Spulenpakets im Kantenbereich durch den Pollappen sicher vermieden, so daß Beschädigungen der Isolationsschicht auf ein Minimum reduziert werden.

Vorteilhafte Weiterbildungen und Verbesserungen des Polkerns ergeben sich aus den Unteransprüchen. Besonders vorteilhaft ist die einfache Herstellung des Polkerns. Die Nuten im übergangsbereich zwischen Grundkörper und Pollappen können durch Materialverdrängung oder Materialabtragung einfach hergestellt werden.

### Zeichnung

Die Erfindung wird im folgenden anhand der Zeichnung näher erläutert. Es zeigen:
- Figur 1: eine perspektivische Ansicht eines Elektromotors mit mehreren von Polkernen gehaltenen Erregerspulen, die teilweise im Schnitt dargestellt sind;
- Figur 2: einen Teilschnitt durch den Elektromotor gemäß Figur 1 mit einer zweiten Ausführungsform eines Polkerns in montierter Stellung;
- Figur 3: eine Unteransicht eines Polkerns;
- Figur 4: einen Schnitt durch das zweite Ausführungsbeispiel des Polkerns in demontierter Ansicht und
- Figur 5: einen Schnitt durch das erste Ausführungsbeispiel eines demontierten Polkerns.

### Beschreibung der Ausführungsbeispiele

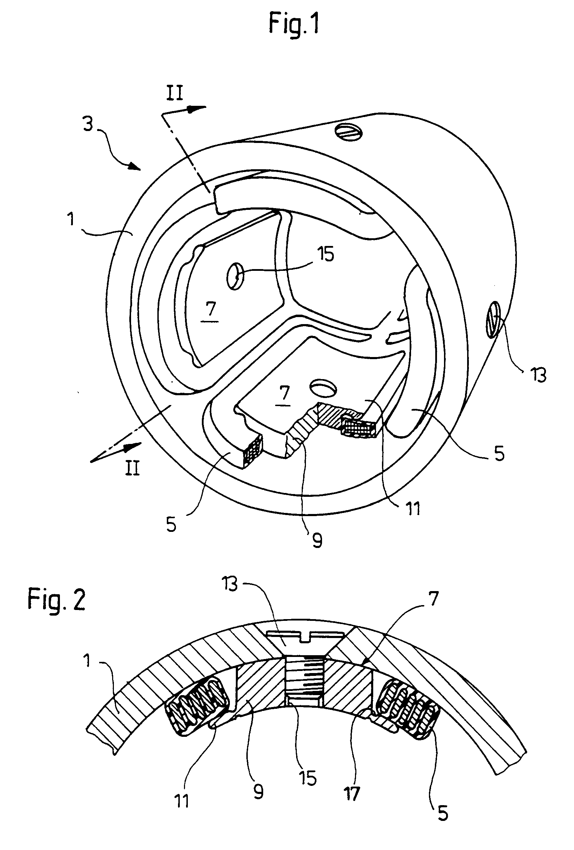

Die perspektivische Darstellung gemäß Figur 1 zeigt das Gehäuse 1 eines Gleichstrommotors 3. An der Gehäusewandung sind hier vier Erregerspulen 5 mit Hilfe von zugehörigen Polkernen 7 festgespannt.

Eine der Erregerwicklungen ist teilweise aufgeschnitten, so daß erkennbar ist, daß von dem Grundkörper 9 des Polkerns 7 im Bereich von dessen Längskanten Pollappen 11 entspringen. Die Pollappen erstrecken sich hier über die gesamte Länge des Grundkörpers 9. Sie überragen die Erregerwicklungen, so daß diese bei festgeschraubtem Polkern gegen die Innenwand des Gehäuses 1 gepreßt werden.

Die Polkerne werden von Befestigungsschrauben 13 gehalten, die von außen durch die Wand des Gehäuses 1 geführt werden und in eine mit einem Innengewinde versehene Ausnehmung 15 im Grundkörper 9 der Polkerne eingeschraubt sind.

Aus dem entlang der in Figur 1 dargestellten Linie II-II verlaufenden Schnitt gemäß Figur 2, wird die Einspannung der Erregerspulen noch einmal deutlich. Gleiche Teile sind mit gleichen Bezugszeichen versehen.

Mit Hilfe der von außen durch die Wand des Gehäuses 1 geführten Befestigungschraube 13 wird der Polkern 7 festgehalten. Zwischen den vom Grundkörper 9 entspringenden Pollappen 11 und der Wand des Gehäuses 1 werden die Erregerspulen 5 festgespannt. Aus der Schnittdarstellung gemäß Figur 2 wird deutlich, daß im Übergangsbereich zwischen dem Grundkörper 9 und dem Pollappen 11 auf der der Erregerwicklung 5 zugewandten Seite Ausnehmungen beziehungsweise Nuten 17 vorgesehen sind, die sich über die gesamte Länge der Pollappen erstrecken.

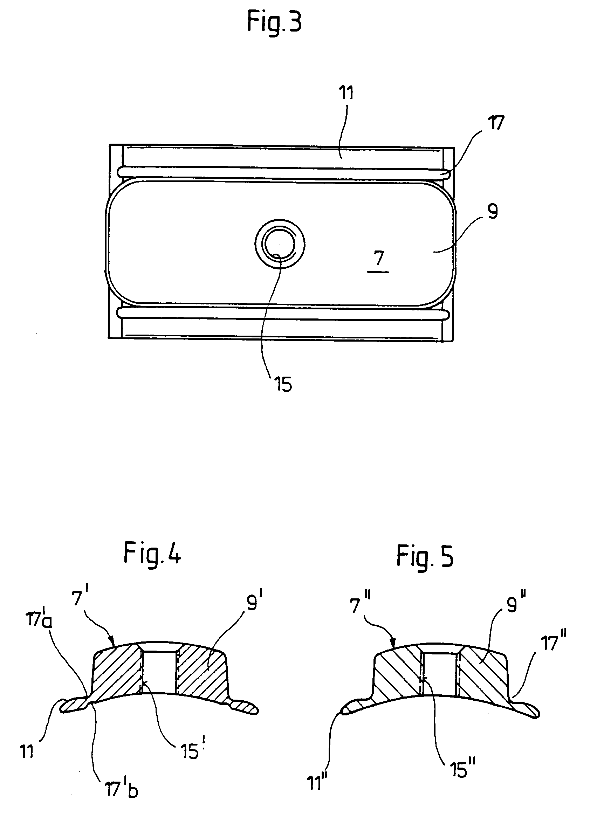

Figur 3 zeigt einen demontierten Polkern 7 in Unteransicht. Es ist ohne weiteres die zentral gelegene Ausnehmung 15 erkennbar, die mit einem Innengewinde versehen ist und der Aufnahme der Spannschraube 13 dient. Auch sind ohne weiteres die vom Grundkörper 9 des Polkerns 7 entspringenden Pollappen 11 erkennbar, die im Übergangsbereich zwischen Grundkörper und den Pollappen mit einer Längsnut 17 versehen sind.

Figur 4 zeigt ein weiteres Ausführungsbeispiel eines Polkerns 7′, der sich dadurch auszeichnet, daß im Übergangsbereich zwischen dem Grundkörper 9′ und dem Pollappen 11′ zwei Nuten 17′a und 17′b vorgesehen sind, wobei die Nut 17′a auf der -in Einbaulage gesehen- der Innenwand des Gehäuses 1 zugewandten Innenseite des Pollappens verläuft, während die Nut 17′b auf der gegenüberliegenden Außenseite des Pollappens angeordnet ist.

Der Polkern 7′ ist mit einer Ausnehmung 15′ versehen, die ein Innengewinde zur Aufnahme der Spannschraube 13 (siehe Figuren 1 und 2) aufweist. Um das Einführen der Befestigungsschraube zu erleichtern, kann das Innengewinde im Polkern auf der der Innenwand des Gehäuses zugewandten Seite mit einer Senkung versehen sein.

Figur 5 zeigt schließlich einen Schnitt durch ein weiteres Ausführungsbeispiel eines Polkerns 7˝, bei dem im Übergangsbereich zwischen dem Grundkörper 9˝ und dem Pollappen 11˝ keine ausgeprägte Nut sondern lediglich eine Einkerbung 17˝ vorgesehen ist.

Auch der in Figur 5 dargestellte Polkern ist mit einer Ausnehmung 15˝ versehen, die ein Innengewinde aufweist. Um das Einführen der Befestigungsschraube zu erleichtern, kann auch bei dieser Ausführungsform das Innengewinde im Polkern auf der der Innenwand des Gehäuses zugewandten Seite mit einer Senkung versehen sein.

Es ist festzuhalten, daß die Längsnuten 17 (Figuren 2 und 3), 17′a, 17′b (Figur 4) beziehungsweise 17˝ (Figur 5) auf beliebige Weise in den Übergangsbereich zwischen Grundkörper und Pollappen des Polkerns eingebracht werden können. Es ist beispielsweise möglich, durch einen Verformvorgang die Längsnuten wie Hohlkehlen in den Ursprungsbereich der Pollappen einzuwalzen oder einzuprägen. Auch ist es denkbar, durch einen Schleif- oder Fräsvorgang Nuten in den Übergangsbereich zwischen Pollappen und Grundkörpers des Polkerns einzubringen. Schließlich ist es auch möglich, bei der Herstellung des Polkerns 7˝ beziehungsweise während eines Gußvorgangs Kerben 17˝, wie sie in Figur 5 dargestellt sind, vorzusehen, die eine gewisse Materialschwächung bedeuten.

Durch die hier beschriebene Ausführung des Polkerns ist es möglich, Erregerwicklungen von Elektromotoren beschädigungsfrei an der Wand des Gehäuse des Motors festzuspannen, auch wenn als Isolationsmaterial für die Erregerspulen eine sehr spröde, warmfeste Beschichtung gewählt wird. Fertigungstoleranzen können bei derartigen Spulen nicht mehr durch die Plastizität des Isolationsmaterials ausgeglichen werden; durch die nachgiebig federnden Pollappen können jedoch auch mit sprödem Isolationsmaterial versehene Spulen sicher montiert werden. Je nach Material des Polkerns können die Ausnehmungen beziehungsweise Vertiefungen im Übergangsbereich zwischen Grundkörper und Pollappen so gewählt werden, daß das verbleibende Restmaterial eine vorbestimmte Feder- beziehungsweise Einspannkraft ermöglicht. Dabei kann eine Begrenzung der auf die Erregerspule wirkenden Kräfte vorgegeben werden, so daß Risse aufgrund zu hoher Einspannkräfte praktisch auszuschließen sind.

Aus der Darstellung in Figur 2 wird deutlich, daß besonders bei der Anordnung der Nut 17 auf der der Erregerwicklung 5 zugewandten Seite des Pollappens 11 eine Beaufschlagung des Kantenbereichs der Spule mit Einspannkräften vermieden wird. Gerade in diesem Bereich können ansonsten sehr hohe Einspannkräfte auftreten, die zu einer Beschädigung beziehungsweise zum Abplatzen des Isolationsmaterials führen.

Die im Bereich des Übergangs zwischen Grundkörper und Pollappen, also im Bereich der Nuten bestehende Wandstärke kann so auf das Material des Polkerns abgestimmt werden, daß sich eine reversible Vorspannung ergibt. Das heißt, der Polkern kann gegebenenfalls nach der Demontage wiederverwendet werden. Es ist auch möglich, Pollappen vor dem Einbau durch Prägen vorzubiegen. Durch das Anziehen der Polkerne werden die Pollappen auf sich ergebende Einbaulage zurückverformt. Insgesamt ist erkennbar, daß durch die nachgiebig elastisch federnden Pollappen Spulen mit einer wärmestabilen härteren Isolationsbeschichtung verwendet werden können. Überdies sind größere Maßabweichungen beim Einbau derartiger Spulen noch tolerierbar.

Das Einwalzen bzw. Einprägen der Nuten bzw. Holkehlen an den Pollappen läßt sich bei konventionellen Polen mit seitlichen Polschuhen als auch bei Polen mit stirnseitigen Pollappen durchführen.

## Patentansprüche

1. Polkern (7; 7′; 7˝) mit Pollappen (11; 11′; 11˝) der an der Polgehäuseinnenseite befestigt ist und der zur Befestigung einer Erregerwicklung (5) im Polgehäuse (1) eines Gleichstrommotors dient, indem die Pollappen (11; 11′; 11˝) auf gegenüberliegenden Seiten einstückig vom Grundkörper (9; 9′; 9˝) des Polkerns (7; 7′; 7˝) entspringen und die Erregerwicklung (5) gegen das Polgehäuse (1) drücken, dadurch gekennzeichnet, daß die Pollappen (11; 11′; 11˝) derart nachgiebig mit dem Grundkörper (9; 9′; 9˝) des Polkerns (7; 7′; 7˝) verbunden sind, daß sie die Erregerwicklung (5) ohne zusätzliche Federelemente elastisch federnd gegen das Polgehäuse (1) andrücken.

2. Polkern nach Anspruch 1, dadurch gekennzeichnet, daß die Pollappen (11; 11′; 11˝) im Übergang zum Grundkörper (9; 9′; 9˝) des Polkernes (7; 7′; 7˝) ein- und/oder beidseitig mit einer Längsnut (17; 17a′; 17b′; 17˝) versehen sind.

3. Polkern nach Anspruch 2, dadurch gekennzeichnet, daß die Längsnut (17) durch Materialverdrängung und/oder Materialabtragung herstellbar ist.

4. Polkern nach einem der Ansprüche 1 bis 4, dadurch gekennzeichnet, daß die Pollappen (11; 11′; 11˝) entlang der Längsseiten des Polkerns (7; 7′; 7˝) verlaufen.

## Claims

1. Pole core (7; 7′; 7˝) with pole lips (11; 11′; 11˝) fixed to the inside of the pole housing for fixing a field winding (5) in a pole housing (1) of a direct current motor, in which the pole lips (11; 11′; 11˝) protrude, each in one piece, on opposite sides from the body (9; 9′; 9˝) of the pole core (7; 7′; 7˝) and press the field winding (5) against the pole housing (1), **characterized by the fact that** the pole lips (11;11′;11˝) are resiliently joined to the central body (9;9′;9˝) of the pole core (7; 7′; 7˝) so that they press the field winding (5), without requiring additional spring elements, with an elastic tension against the pole housing (1).

2. Pole core in accordance with claim 1, **characterized by the fact that** the pole lips (11; 11′; 11˝) are provided with a groove (17;17a′;17b′;17˝) on one side and/or both sides, in the transitional region to the central body (9; 9′; 9˝) of the pole core (7; 7′; 7˝).

3. Pole core in accordance with claim 1 or 2, **characterized by the fact that** the longitudinal groove (17) can be manufactured by material displacement and/or material removal.

4. Pole core in accordance with one of the claims 1 to 4, **characterized by the fact that** the pole lips (11;11′;11˝) extend along the longitudinal sides of the pole core (7; 7′; 7˝).

## Revendications

1. Noyau polaire (7 ; 7′ ; 7′) avec pattes polaires (11 ; 11′ ; 11˝), qui est fixé sur le côté intérieur du carter polaire et qui sert à fixer un enroulement d'excitation (5) dans le carter polaire (1) d'un moteur à courant continu, tandis que les pattes polaires (11; 11′ ; 11˝) s'échappent sur des côtés opposées du corps de base (9 ; 9′ ; 9˝) du noyau polaire (7; 7′ ; 7˝) en formant une seule pièce avec lui, et pressent l'enroulement d'excitation (5) contre le carter polaire (1), noyau polaire caractérisé en ce que les pattes polaires (11 ; 11′ 11˝) sont reliées de façon flexible au corps de base (9 ; 9′ ; 9˝) du noyau polaire (7 ; 7′ ; 7˝) de telle sorte qu'elles compriment l'enroulement d'excitation (5) contre le carter polaire (1) de façon élastique sans éléments de ressort supplémentaires.

2. Noyau polaire selon la revendication 1, caractérisé en ce que les pattes polaires (11 ; 11′ ; 11˝) sont pourvues dans le passage situé entre le corps de base (9 ; 9′ ; 9˝) du noyau polaire (7 ; 7′ ; 7˝) d'une rainure longitudinale (17 ; 17a′, 17b′ ; 17˝) d'un côté et/ou des deux côtés.

3. Noyau polaire selon la revendication 2, caractérisé en ce que la rainure longitudinale (17) peut être fabriquée par matriçage de la matière ou en enlevant de la matière.

4. Noyau polaire selon l'une des revendications 1 à 4, caractérisé en ce que les pattes polaires (11 ; 11′ ; 11˝) s'étendent le long des côtés longitudinaux du noyau polaire (7 ; 7′ ; 7˝).
